# EUROPÄISCHE PATENTANMELDUNG

(11) **EP 1 361 007 A2**
(43) Veröffentlichungstag der Anmeldung: **12.11.2003**
(21) Anmeldenummer: 03004611.4
(22) Anmeldetag: 01.03.2003
(51) Int. Cl.: B21H 7/18

(54) **Rillenformwerkzeug**

(30) Priorität: 08.05.2002 DE 20207364 U
(71) Anmelder: HAZET-WERK HERMANN ZERVER GmbH & Co. KG, D-42857 Remscheid (DE)
(72) Erfinder: Hemmerle, Rolf, 42929 Wermelskirchen (DE)
(74) Vertreter: Ksoll, Peter, Dr.-Ing.

(57) **Zusammenfassung**

Die Erfindung betrifft ein Werkzeug zum Formen einer Rille (2) an der äußeren Oberfläche (3) eines Rohrs (4). Das Werkzeug weist ein Gehäuse (5) mit einem hierin ausgebildeten Formraum (6) zur Aufnahme eines Rohrendes (7) auf. Im Formraum (6) ist zumindest ein Stützkörper (12, 13) und ein Schneidradkörper (11) vorgesehen, wobei der Schneidradkörper (11) und/oder der Stützkörper (12, 13) im Gehäuse (5) federnd nachgiebig gelagert und mittels eienr Verriegelung (17) in der Schneidposition (S) arretierbar sind. Vorzugsweise sind im Formraum (6) ein Schneidradkörper (11) und zwei rollenförmig ausgebildete Stützkörper (12, 13) auf einem Teilkreis um jeweils 120° versetzt angeordnet.

## Beschreibung

Die Erfindung betrifft ein Werkzeug zum Formen einer Rille an der äußeren Oberfläche eines Rohrs gemäß den Merkmalen im Oberbegriff von Schutzanspruch 1.

Ein gattungsgrößeres Rillenformwerkzeug ist bekannt. Es ist entwickelt worden, um eine definierte Rille in einem vorgegebenen Abstand am Rohrende eines Edelstahlrohrs einzuschneiden. Die Rille dient zur Aufnahme eines O-Rings, um das Rohr dann mit Anschlussbauteilen beispielsweise T- oder winkelförmigen Einschraub- oder Steckanschlüssen über ein sogenanntes Blitz- oder Schnellanschlusssystem zu verbinden.

Das bekannte Werkzeug weist ein Gehäuse auf mit einem hierin vorgesehenen Formraum. Dieser wird durch zwei fixiert drehbar gelagerte Stützrollen und ein Schneidrad gebildet, welches über eine Spindel mittels eines Rändelrades einstellbar ist. Durch die Verstellung des Schneidrades kann der Formraum auf verschiedene Rohrdurchmesser angepasst werden.

Um eine Rille zu schneiden wird das Rohrende in den Formraum eingeschoben. Anschließend wird der Schneidradkörper durch Betätigung des Rändelrades bis auf das Edelstahlrohr zugedreht und das Gerät so lange um die Rohrachse gedreht bis die gewünschte Rille erzeugt ist.

Das bekannte Werkzeug hat sich in der Praxis grundsätzlich bewährt. Es arbeitet zuverlässig für verschiedene Durchmesser. Es baut jedoch in radialer Richtung vergleichsweise groß. Dies ist insbesondere in Anwendungsfällen mit begrenztem Platzbedarf beispielsweise bei der Bearbeitung einzelner, in einem Rohrbündel angeordneter Rohre nachteilig, da hier der notwendige seitliche Freiraum für das Drehen des Gerätes um das Rohr nicht vorhanden ist. Dies macht die Montagearbeiten umständlich und kann auch zu Verletzungen der Hände beim Betätigen des Werkzeugs durch die benachbarten Rohrenden führen.

Der Erfindung liegt ausgehend vom Stand der Technik die Aufgabe zugrunde, ein in der Handhabung verbessertes kompakt bauendes Rillenformwerkzeug zu schaffen.

Die Lösung dieser Aufgabe besteht nach der Erfindung in einem Werkzeug gemäß den Merkmalen von Schutzanspruch 1, bei dem im allgemeinen Erfindungsgedanken dem Formraum zumindest ein Stützkörper und ein Schneidradkörper zugeordnet sind, die jeweils einzeln oder auch beide im Gehäuse federnd nachgiebig gelagert und mittels einer Verriegelung in der Schneidposition arretierbar sind.

Die erfindungsgemäße Ausgestaltung ermöglicht eine sehr kompakte einfach handhabbare Bauform des Werkzeugs. Das Werkzeug kann in axialer Richtung von vorne auf ein Rohrende aufgesteckt und betätigt werden. Durch eine Drehung um das Rohr wird die gewünschte Rille erstellt. Die Betätigung des Rillenformwerkzeugs erfolgt von vor Kopf also von dem dem Formraum abgewandten Ende des Werkzeugs aus. Seitlich ist für die Drehung des Werkzeugs nur ein geringer Platzbedarf notwendig.

Für die Praxis ist vorgesehen, dass jeweils für einen bestimmten Rohrdurchmesser ein Rillenformwerkzeug zur Verfügung steht. Grundsätzlich kann der Formraum aber auch im Durchmesser verstellbar konzipiert werden.

Vorteilhafte Ausgestaltungen und Weiterbildungen des grundsätzlilchen Erfindungsgedankens bilden Gegenstand der abhängigen Ansprüche 2 bis 10.

Im allgemeinen Erfindungsgedanken kann sowohl der Schneidradkörper als auch der Stützkörper im Gehäuse federnd nachgiebig gelagert sein. Das Rillenformwerkzeug kann mit dem Formraum von vorn axial auf das zu bearbeitende Rohrende gesetzt werden. Hierbei können der Schneidradkörper bzw. der Stützkörper federnd nachgeben. Anschließend wird der Schneidradkörper und/oder der Stützkörper durch die Verriegelung in der Schneidposition arretiert.

Besonders vorteilhaft weist das erfindungsgemäße Werkzeug einen rollenförmigen Schneidradkörper und zwei rollenförmig ausgebildete Stützkörper auf, die jeweils auf einem Teilkreis um 120° versetzt angeordnet sind. Die Stützkörper sind drehbar lagefixiert angeordnet, wohingegen der Schneidkörper quer zu seiner Drehachse unter dem Einfluss einer Schraubendruckfeder verlagerbar ist.

Das Gehäuse ist vorzugsweise zylindrisch ausgeführt. Der Schneidradkörper und die Stützkörper ragen zumindest in der Schneidposition mit Teilen ihres Umfangs in den Formraum.

Die Verriegelung, vorzugsweise die des Schneidradkörpers weist einen durch einen Hebel verstellbaren und mit einer umfangsseitigen Exzenterfläche versehenen Klemmkörper auf. Der Klemmkörper ist ebenfalls rollenartig konfiguriert und exzentrisch gelagert. Die Exzenterfläche ist genutet und steht mit der zylindrisch gestalteten Oberfläche des Schneidradkörpers in Kontakt. Die in der Exzenterfläche vorgesehene Nut dient als Freiraum für die am Schneidradkörper vorgesehene umlaufende Schneide.

Im Rahmen der Erfindung ist insbesondere vorteilhaft, wenn der Hebel an dem dem Formraum abgewandten Ende des Gehäuses angeordnet und mit dem Klemmkörper über eine sich in Längsrichtung durch das Gehäuse erstreckende Welle verbunden ist. Dies trägt wesentlich zur kompakten und einfach handhabbaren Bauart des erfindungsgemäßen Werkzeugs bei. Das Werkzeug wird von vorne auf das Rohrende aufgesteckt und der Schneidradkörper wird dann durch Betätigung des Hebels über den Klemmkörper in der Schneidposition arretiert. Durch Drehen des Werkzeugs um die Rohrachse wird die Rille erstellt. In diesem Zusammenhang ist ferner vorteilhaft, wenn das Gehäuse eine Aufnahme zum Ansetzen eines Betätigungswerkzeugs aufweist. Diese ist zweckmäßigerweise an der dem Formraum gegenüberliegenden Stirnseite des Gehäuses vorgesehen. Die Aufnahme kann beispielsweise in Form eines Vierkantes gestaltet sein, über den eine Ratsche oder ein ähnliches Betätigungswerkzeug angesetzt werden kann.

Die praktische Anwendung wird ferner unterstützt, wenn im Formraum ein Anschlag vorgesehen ist, an den das zu bearbeitende Rohrende mit seiner Stirnseite zur Anlage gelangt. Durch den Anschlag ist folglich der definierte Abstand der Rille zum freien Ende des Rohres vorgegeben.

Für die Praxis ist geplant, jeweils ein einzelnes Werkzeug für einen bestimmten Rohrdurchmesser vorzusehen. Zweckmäßigerweise wird für die praktische Anwendung ein Satz von einzelnen Werkzeugen bereitgestellt, abgestimmt auf die notwendigen Rohrdurchmesser. Demzufolge sind zwar verschiedene Werkzeuge für unterschiedliche Rohrdurchmesser notwendig, diese einzelnen Werkzeuge können jedoch verwechslungsfrei gekennzeichnet werden, was zu einer Vereinfachung in der Handhabung führt. Gerade unter Montage-Bedingungen, beispielsweise in begrenzten Räumlichkeiten und unter Umständen ölverschmierter Umgebung, ist ein präzises Einstellen des Werkzeugs auf den jeweils erforderlichen Rohrdurchmesser schwierig. Dies wird nun vermieden. Der Monteur nimmt das jeweils passende Werkzeug und steckt dieses auf ein Rohrende. Das Rillenformwerkzeug wird dann durch Umlegen des Hebels arretiert und unter Zuhilfenahme eines Betätigungswerkzeuges gedreht.

Die Erfindung ist nachfolgend anhand eines in den Zeichnungen dargestellten Ausführungsbeispiels näher beschrieben. Es zeigen:
- Figur 1: ein erfindungsgemäßes Werkzeug im vertikalen Längsschnitt;
- Figur 2: eine Draufsicht, teilweise in geschnittener Darstellungsweise auf die Darstellung der Figur 1 gemäß dem Pfeil II und
- Figur 3: eine Stirnansicht auf das Werkzeug gemäß dem Pfeil III.

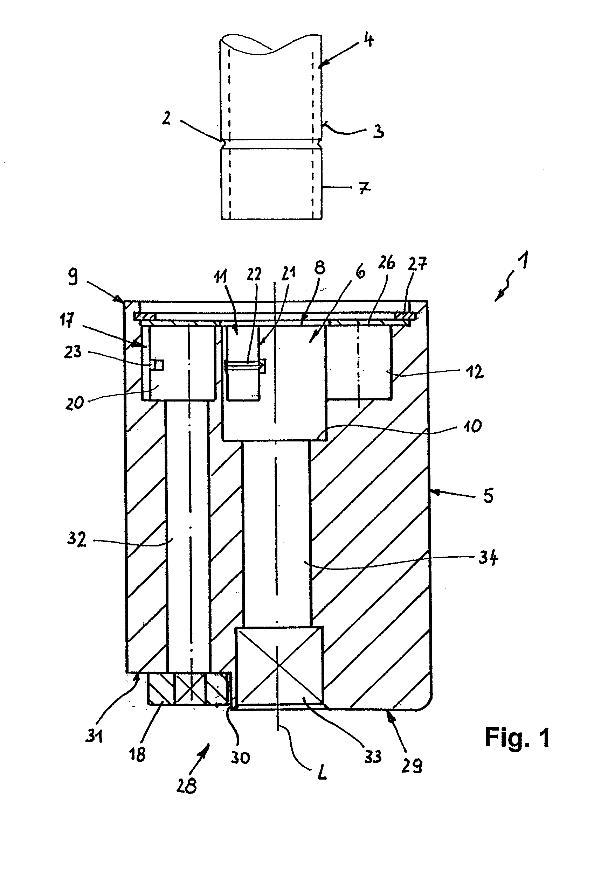

Die Figuren 1 bis 3 zeigen ein Rillenformwerkzeug 1. Das Werkzeug 1 wird eingesetzt, um eine Rille 2 an der äußeren Oberfläche 3 eines Rohrs 4 aus Edelstahl zu schneiden. Die Figur 1 zeigt das Rohr 4 mit einer bereits fertig geschnittenen Rille 2.

Das Werkzeug 1 weist ein massives zylindrisches Gehäuse 5 aus Metall auf, beispielsweise aus Aluminium. Im Gehäuse 5 befindet sich ein Formraum 6 zur Aufnahme des Rohrendes 7. Der Formraum 6 weist eine stirnseitige Einführöffnung 8 am Ende 9 des Gehäuses 5 auf. Die Tiefe des Formraums 6 ist begrenzt durch einen Anschlag 10. Das Rohrende 7 wird in den Formraum 6 eingeführt, bis es stirnseitig am Anschlag 10 zur Anlage gelangt. Auf diese Weise ist die Position der zu erstellenden Rille 2 in dem erforderlichen Längenabstand am Rohrende 7 definiert.

Dem Formraum 6 ist ein rollenförmiger Schneidradkörper 11 und zwei rollenförmig ausgebildete Stützkörper 12, 13 zugeordnet. Der Schneidradkörper 11 und die beiden Stützkörper 12, 13 sind auf einem Teilkreis um jeweils 120° zueinander versetzt angeordnet. Die beiden Stützkörper 12, 13 sind drehbar, jedoch lagefixiert im Gehäuse 5 angeordnet, wohingegen der Schneidradkörper 11 quer zu seiner Drehachse 14 unter dem Einfluss einer Schraubendruckfeder 15 nachgiebig gelagert ist. Die Schraubendruckfeder 15 ist in einer quergerichteten Sackbohrung 16 untergebracht.

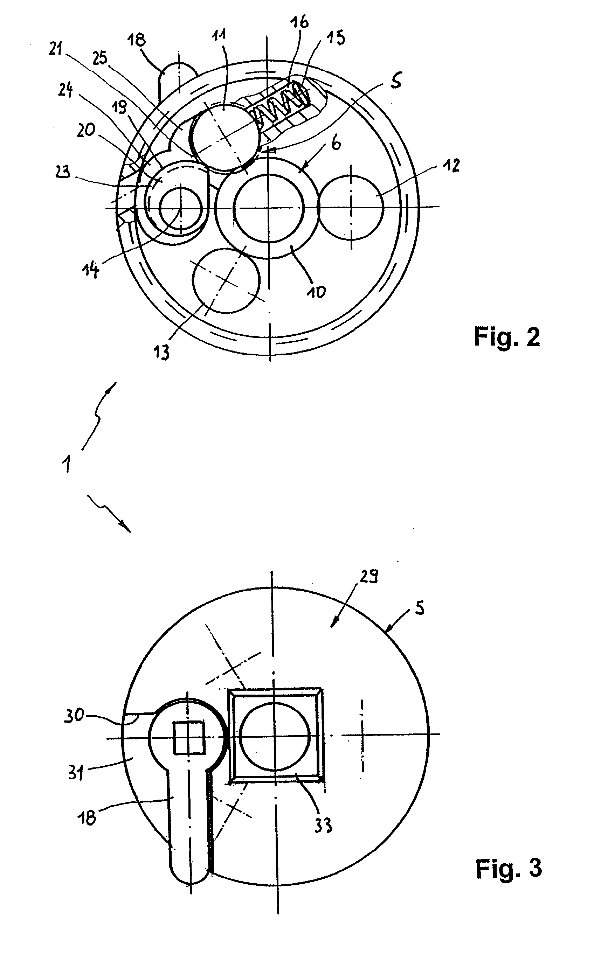

Mittels einer Verriegelung 17 kann der Schneidradkörper 11 in der Schneidposition S arretiert werden. Figur 2 zeigt den Schneidradkörper 11 in der Schneidposition S. Hierbei ragen der Schneidradkörper 11 und die Stützkörper 12, 13 mit Teilen ihres Umfangs in den Formraum 6.

Die Verriegelung 17 weist einen durch einen Hebel 18 verstellbaren und mit einer umfangsseitigen Exzenterfläche 19 versehenen Klemmkörper 20 auf. Dieser steht über die Exzenterfläche 19 mit der zylindrisch gestalteten Oberfläche 21 des Schneidradkörpers 11 in Kontakt. Mittig weist der Schneidradkörper 11 eine umlaufende Schneide 22 auf. Am Klemmkörper 20 ist eine zur Schneide 22 korrespondierende Nut 23 vorgesehen. Diese schafft einen Freiraum, so dass sich die Schneide 22 bei der Drehbewegung des Schneidradkörpers 11 frei drehen kann. Der Schneidradkörper 11 und der Klemmkörper 20 sind in langlochartigen Ausnehmungen 24, 25 angeordnet, die ineinander übergehen, so dass sich eine etwa nierenförmige Konfiguration ergibt.

Stirnseitig sind der Formraum 6 sowie der Schneidradkörper 11 und die Stützkörper 12, 13 durch eine Lochscheibe 26 abgedeckt, die mittels eines Seeger-Rings 27 gesichert ist.

Der Hebel 18 ist an dem, dem Formraum 6 abgewandten Ende 28 des Gehäuses 5 an dessen Stirnseite 29 angeordnet. Hier weist das Gehäuse 5 einen Absatz 30 mit einer freien Planfläche 31 für den Hebel 18 auf. Die Tiefe des Absatz 30 ist so gewählt, das der Hebel 18 nicht über die Stirnseite 29 des Gehäuses 5 übersteht.

Der Hebel 18 ist mit dem Klemmkörper 20 über eine sich in Längsrichtung L durch das Gehäuse 5 erstreckende Welle 32 verbunden. Durch Umlegen des Hebels 18 wird der exzentrisch gelagerte Klemmkörper 20 gedreht. Hierbei drückt die bogenförmige Exzenterfläche 19 den Schneidradkörper 11 in die Schneidposition S und arretiert diesen dort. Die Wirkungslinie der Schraubendruckfeder 15 und die Wirkungslinie der durch die Exzenterfläche eingeleiteten Kraft sind so konzipiert, dass eine Selbsthemmung des Klemmkörpers 20 in der Schneidposition S erfolgt. Dies gewährleistet, dass die Arretierung beim Schneidvorgang nicht ungewollt aufgehoben werden kann. Die Verriegelung 17 muss manuell aufgehoben werden.

Man erkennt ferner, dass am Ende 28 des Gehäuses 5 in der Stirnseite 29 eine Aufnahme 33 in Form eines Vierkants zum Ansetzen eines Betätigungswerkzeugs, beispielweise einer Ratsche, vorgesehen ist. In Längsrichtung L wird das Gehäuse 5 ferner von einer zentralen Bohrung 34 durchsetzt, welches vom Boden der Aufnahme 33 ausgehend in den Formraum 6 mündet.

Das erfindungsgemäße Rillenformwerkzeug 1 zeichnet sich durch seine kompakte kleine Bauform aus. Das seitlich über den Durchmesser eines Rohrs 4 überstehende Bauvolumen ist gering. Die Handhabung und Betätigung ist einfach. Das Rillenformwerkzeug 1 wird vor Ort während der Montagearbeiten von vorne auf das Rohrende 7 gesteckt. Hierbei ist der Schneidradkörper 11 gelöst. auf Grund seiner federnd nachgiebigen Lagerung kann der Schneidradkörper 11 beim Einführen des Rohrendes ausweichen. Anschließend wird der Schneidradkörper in der Schneidposition S mittels der Verriegelung 17 arretiert. Dies geschieht durch Umlegen des Hebels 18, ebenfalls vom freien Ende 28 aus. Im Formraum 6 ist das Rohr an den Stützkörpern 12, 13 abgestützt. Das Rillenformwerkzeug 1 wird dann mittels eines in die Aufnahme 29 eingesetzten Betätigungswerkzeugs gedreht. Durch die mechanische Krafteinwirkung des Schneidradkörpers 11 bzw. der Schneide 22 wird die Rille 2 an der äußeren Oberfläche 3 des Rohrs 4 erzeugt.

### Bezugszeichenliste

- 1 -: Rillenformwerkzeug
- 2 -: Rille
- 3 -: äußere Oberfläche v. 4
- 4 -: Rohr
- 5 -: Gehäuse
- 6 -: Formraum
- 7 -: Rohrende
- 8 -: Einführöffnung
- 9 -: Ende v. 5
- 10 -: Anschlag
- 11 -: Schneidradkörper
- 12 -: Stützkörper
- 13 -: Stützköper
- 14 -: Drehachse
- 15 -: Schraubendruckfeder
- 16 -: Sackbohrung
- 17 -: Verriegelung
- 18 -: Hebel
- 19 -: Exzenterfläche
- 20 -: Klemmkörper
- 21 -: Oberfläche v. 11
- 22 -: Schneide
- 23 -: Nut
- 24 -: Ausnehmung
- 25 -: Ausnehmung
- 26 -: Lochscheibe
- 27 -: Seeger-Ring
- 28 -: Ende v. 5
- 29 -: Stirnseite
- 30 -: Absatz
- 31 -: Planfläche
- 32 -: Welle
- 33 -: Aufnahme
- 34 -: Bohrung

- S -: Schneidposition
- L -: Längsrichtung v. 5

## Patentansprüche

1. Werkzeug zum Formen einer Rille (2) an der äußeren Oberfläche (3) eines Rohrs (4), welches ein Gehäuse (5) mit einem hierin ausgebildeten Formraum (6) zur Aufnahme eines Rohrendes (7) aufweist, wobei dem Formraum (6) zumindest ein Stützkörper (12, 13) und ein Schneidradkörper (11) zugeordnet sind, **dadurch gekennzeichnet, dass** der Schneidradkörper (11) und/oder der Stützkörper (12, 13) im Gehäuse (5) federnd nachgiebig gelagert und mittels einer Verriegelung (17) in der Schneidposition (S) arretierbar sind.

2. Werkzeug nach Anspruch 1, **dadurch gekennzeichnet, dass** ein Schneidradkörper (11) und zwei rollenförmig ausgebildete Stützkörper (12, 13) auf einem Teilkreis um jeweils 120° versetzt angeordnet sind.

3. Werkzeug nach Anspruch 1 oder 2, **dadurch gekennzeichnet, dass** jeder Stützkörper (12, 13) drehbar lagefixiert und der Schneidradkörper (11) quer zu seiner Drehachse (14) unter dem Einfluss einer Schraubendruckfeder (15) verlagerbar ist.

4. Werkzeug nach einem der Ansprüche 1 bis 3, **dadurch-gekennzeichnet**, dass der Formraum (6) an einem Ende (9) des zylindrisch ausgebildeten Gehäuses (5) vorgesehen ist und der Schneidradkörper (11) sowie die Stützkörper (12, 13) mit Teilen ihres Umfangs in den Formraum (6) ragen.

5. Werkzeug nach einem der Ansprüche 1 bis 4, **dadurch-gekennzeichnet**, dass die Verriegelung (17) einen durch einen Hebel (18) verstellbaren und mit einer umfangsseitigen Exzenterfläche (19) versehenen Klemmkörper (20) aufweist.

6. Werkzeug nach Anspruch 5, **dadurch gekennzeichnet, dass** der Klemmkörper (20) über seine genutete Exzenterfläche (19) mit der zylindrisch gestalteten Oberfläche (21) des Schneidradkörpers (11) in Kontakt steht.

7. Werkzeug nach Anspruch 5 oder 6, **dadurch gekennzeichnet, dass** der Hebel (18) an dem dem Formraum (6) abgewandten Ende (24) des Gehäuses (5) angeordnet und mit dem Klemmkörper (20) über eine sich in Längsrichtung durch das Gehäuse (5) erstreckende Welle (32) verbunden ist.

8. Werkzeug nach einem der Ansprüche 1 bis 7, **dadurch gekennzeichnet, dass** an dem dem Formraum abgewandten Ende (28) des Gehäuses (5) eine Aufnahme (33) zum Ansetzen eines Betätigungswerkzeugs vorgesehen ist.

9. Werkzeug nach Anspruch 8, **dadurch gekennzeichnet, dass** die Aufnahme (33) an der Stirnseite (29) des Gehäuses (5) vorgesehen ist.

10. Werkzeug nach einem der Ansprüche 1 bis 9, **dadurch-gekennzeichnet**, dass der Formraum (6) einen Anschlag (10) zur stirnseitigen Anlage des Rohrendes (7) aufweist.
